# EUROPÄISCHE PATENTSCHRIFT

(11) **EP 1 059 465 B1**
(45) Veröffentlichungstag und Bekanntmachung des Hinweises auf die Patenterteilung: **02.11.2005**
(21) Anmeldenummer: 00110013.0
(22) Anmeldetag: 12.05.2000
(51) Int. Cl.: F16D 55/224

(54) **Befestigungsvorrichtung für einen Bremssattel an einem Radträger**
Device for mounting a caliper to a wheel carrier
Dispositif pour la fixation d'un étrier de frein à un support de roue

(30) Priorität: 08.06.1999 DE 19926000
(43) Veröffentlichungstag der Anmeldung: 13.12.2000
(73) Patentinhaber: Dr.Ing. h.c.F. Porsche Aktiengesellschaft, 70435 Stuttgart (DE)
(72) Erfinder: Schote, Norbert, 72119 Ammerbuch (DE)

(56) Entgegenhaltungen:
- GB-A- 1 268 031
- GB-A- 2 225 396
- US-A- 3 251 436
- US-A- 3 705 641
- PATENT ABSTRACTS OF JAPAN vol. 1997, no. 05, 30. Mai 1997 (1997-05-30) & JP 09 025967 A (AKEBONO BRAKE IND CO LTD), 28. Januar 1997 (1997-01-28)

## Beschreibung

Die Erfindung bezieht sich auf eine Befestigungsvorrichtung für einen Bremssattel an einem Radträger nach dem Oberbegriff des Anspruchs 1.

Aus der DE 43 13 624 A1 ist eine Befestigung eines Bremssattels an einem Radträger bekannt, wobei der Bremssattel innenseitig des Radträgers, d.h. an der dem Rad zugekehrten Seite mit diesem verbunden ist. Desweiteren ist aus der DE 43 14 311 A1 eine Achsschenkelanordnung für Kraftfahrzeuge bekannt, bei der eine Schwimmsattel-Scheibenbremse und ein Radachslager an einem Trägerbauteil befestigt ist.

Die gattungsbildende US 3,251,436 zeigt einen Bremssattel für eine Teilbelag-Scheibenbremse, bei dem es zur vereinfachten Herstellung vorgesehen ist, dass Betätigungseinrichtungen bestehend jeweils aus einem Bremskolben mit zugehörigem Zylinder separat hergestellt und innenseits der Bremszange befestigt werden. An der Bremszange müssen daher nur noch Anlageflächen bearbeitet werden. Eine derartige Anordnung ist sowohl für Schwimmsattelbremsen wie auch für Festsattelbremsen dargestellt.

Aufgabe der Erfindung ist es, eine Befestigungsvorrichtung für einen Bremssattel an einem Radträger zu schaffen, die eine einfache Montage eines Festsattels oder eines Schwimmsattels ermöglicht.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß ein Radträger in der Weise mit einer vorragenden Rippe ausgebildet ist, daß wahlweise eine Festlegung sowohl eines Schwimmsattels als auch eines Festsattels nur mit einem geringen Herstellungs- bzw. Fertigungsaufwand möglich wird. So weist die Rippe eine Herstellungsdicke auf, die zu der wahlweisen Befestigung des Schwimm- oder Festsattels ausgeführt ist und hierzu an jeder Seite um einen Dickenbetrag derart verminderbar ist, daß eine Grunddicke der Rippen zum Befestigen des Bremssattels bestehen bleibt. Der Festsattel ist in bezug auf das Rad an der Außenseite und der Schwimmsattel an der Innenseite der Rippe mit einem definierten Abstand zur Bremsscheibe über Schraubmittel befestigt. Insbesondere ist die Rippe im Grundzustand mit der Herstellungsdicke zu einer Rippen-Mittenebene mit gleich dick ausgebildeten Rippenhälften ausgeführt, wobei die Rippe im Befestigungszustand mit einem Bremssattel zur Mittenebene unsymmetrisch ausgebildet ist.

Damit ein entsprechend definierter Abstand zur Bremsscheibe eingehalten werden kann, wird somit an der Seite an welcher der Bremssattel befestigt wird, die Rippe des Radträgers um einen Dickenbetrag vermindert. Insgesamt soll unabhängig davon, ob an der Außenseite oder an der Innenseite die Rippe in der Dicke vermindert wird, aus Festigkeitsgründen eine Grunddicke eingehalten werden.

Die Befestigung des Schwimmsattels an der Rippe des Radträgers erfolgt an der Rippe mittels mindestens einer Schraube, die in einer Gewindebohrung des Schwimmsattels gehalten wird, wobei in der Rippe eine Durchgangsbohrung vorgesehen ist.

Dagegen erfolgt die Befestigung des Festsattels an der Rippe des Radträgers mittels mindestens einer Schraube, die in einer Gewindebohrung der Rippe gehalten wird und die Schraube eine Durchgangsbohrung des Festsattels durchragt.

Es ist bei der erfindungsgemäßen Ausbildung des Radträgers mit einer Rippe, welche die Möglichkeit einer Dickenverminderung entsprechend der Verwendung für einen Festsattel oder Schwimmsattel aufweist, nur ein Radträger erforderlich, wodurch eine Teilevielfalt reduziert wird. Zudem wird durch den Radträger erreicht, daß bis auf die Bremsscheibe, die Bauteile wie Radnabe, Radlager und Antriebswelle bei beiden Bremssätteln gleich sind.

Zur Festlegung des Schwimmsattels an der Innenseite der Rippe des Radträgers und des Festsattels an der Außenseite der Rippe kann auch eine Rippe mit einer Grunddicke verwendet werden, die symmetrisch zu einer Mittenebene ausgeführt ist. Eine solche Ausführung wird dann verwendet, wenn der Abstand zur Bremsscheibe eingehalten wird d.h., wenn nach innen die großbauende Schwimmsattelbremse und nach außen die großbauende Festsattelbremse so unterzubringen sind, daß die erforderlichen definierten Abstände zur Bremsscheibe eingehalten werden.

Ein Ausführungsbeispiel der Erfindung sind in den Zeichnungen dargestellt und werden nachfolgend näher erläutert.

Es zeigen
- Fig. 1: eine Teilansicht eines Radträgers mit Festsattelanbindung und einer Bremsscheibe auf einer Radnabe im Schnitt,
- Fig. 2: eine Teilansicht eines Radträgers mit Schwimmsattelanbindung und einer Bremsscheibe auf der Radnabe im Schnitt,
- Fig. 3: eine schematische Darstellung der Radträgerrippe mit einer Herstellungsdicke, die gleich einer Grunddicke ausgeführt ist und
- Fig. 4: eine schematische Darstellung der Radträgerrippe mit Grundmaßen.

Von der Bremsanlage 1 ist die Bremsscheibe 2; 2a sowie das Anbindungsteil 3; 3a des Bremssattels 4; 4a an einer vorragenden Rippe 5; 5a eines Radträgers 6 näher dargestellt. Die Bremsscheibe 2; 2a ist mit einer Radnabe 7 verbunden, welche ein Radlager 8 trägt, deren Außenring 9 im Radträger 6 gehalten wird.

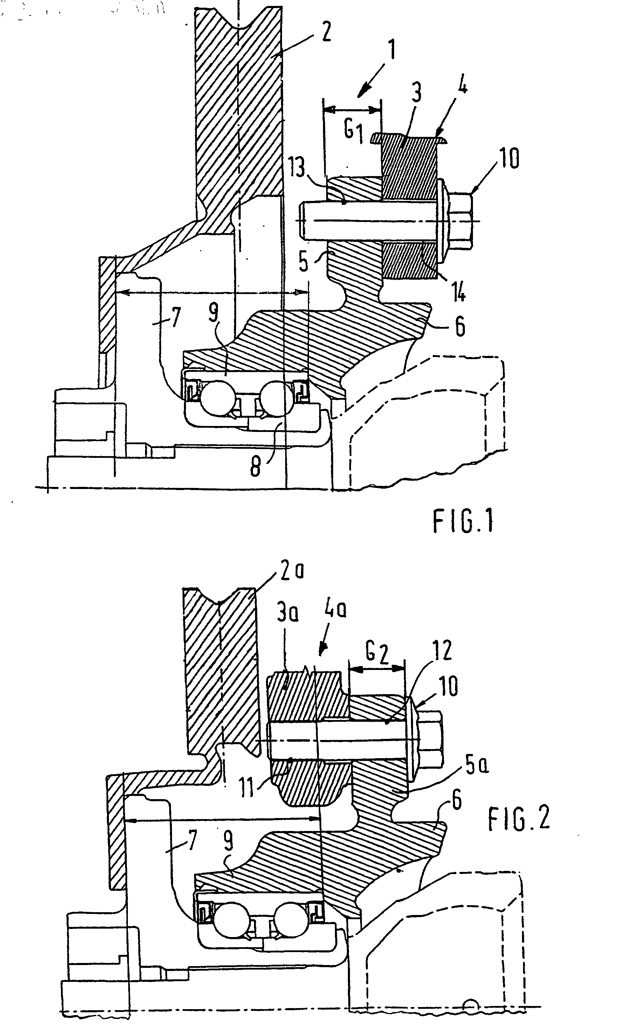

In Fig. 1 ist die Befestigung eines Festsattels 4 am Radträger 6 und in Fig. 2 ist die Befestigung eines Schwimmsattels 4a am Radträger 6 näher dargestellt.

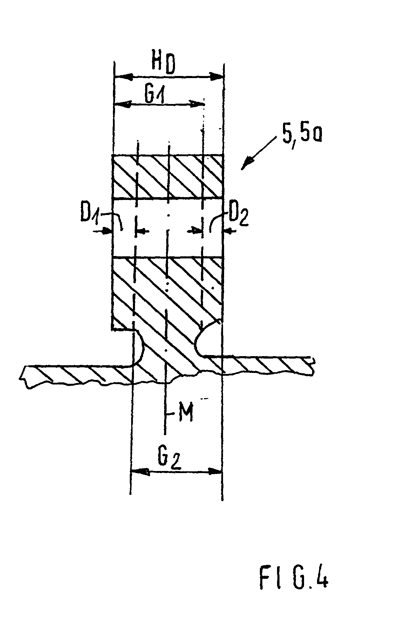

Die vorragende Rippe 5 des Radträgers gemäß Fig. 4 weist eine Herstellungsdicke H_{D} auf, die zur wahlweisen Befestigung des Schwimm- oder Festsattels an jeder Seite eine verminderbaren Dickenbetrag D₁ und D₂ aufweist. Dieser Dickenbetrag D₁ und D₂ ist in Abhängigkeit von der Befestigung entweder des Festsattels 4 oder Schwimmsattels 4a abtragbar, so daß sich eine Grunddicke G₁ für den Festsattel 4 und eine Grunddicke G₂ für den Schwimmsattel 4a ergibt.

Wie in Fig. 1 näher dargestellt, ist der Festsattel 4 mit seinem Anbindungsteil 3 außenseitig der Rippe 5 angeordnet, wobei die Grunddicke G₁ der Rippe 5 verwendet wird. Nach der weiteren Ausführung gemäß Fig. 2 ist das Anbindungsteil 3a des Schwimmsattels 4a innenseitig der Rippe 5a angeordnet, wobei die Herstellungsdicke H_{D} um den Dickenbetrag D₁ auf die Grunddicke G₂ vermindert ist, welche der Grunddicke G₁ entspricht. In beiden Ausführungen gemäß Fig. 1 und Fig. 2 ist die Rippe 5 und 5a unsymmetrisch zu einer Mittenebene M ausgeführt.

Die Befestigung des Festsattels 4 an der Rippe 5 über das Anbindungsteil 3 erfolgt mittels Schrauben 10, die in der Rippe 5 über ein Gewinde 13 festsetzbar sind, wobei im Anbindungsteil 3 eine Durchgangsbohrung 14 vorgesehen ist. Der Schwimmsattel 4a wird ebenfalls über Schrauben 10 an der Rippe 5a des Radträgers 6 festgesetzt, wobei die Schrauben 10 über ein Gewinde 11 im Anbindungsteil 3a des Schwimmsattels 4a festgehalten wird, und in der Rippe 5a eine Durchgangsbohrung 12 für die Schraube 10 vorgesehen ist.

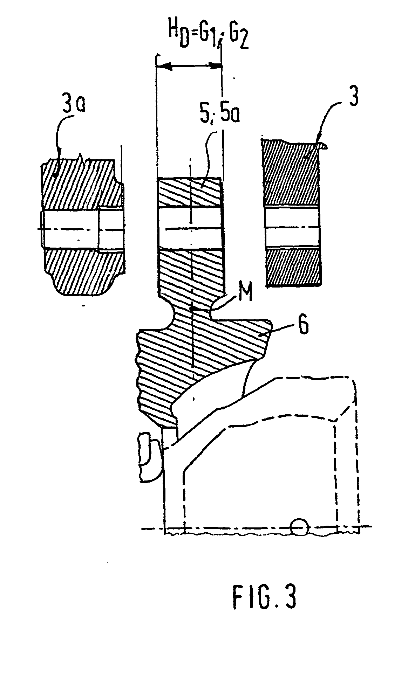

Nach einer weiteren Ausführung gemäß Fig. 3 kann die Rippe 5; 5a am Radträger 6 auch zu der Mittenebene M symmetrisch ausgeführt sein, so daß der Schwimmsattel 4a an der Innenseite und der Festsattel an der Außenseite der Rippe befestigbar ist. Die Rippe weist in diesem Fall eine Herstellungsdicke auf, welche der Grunddicke G₁ bzw. G₂ entspricht.

## Patentansprüche

1. Radträger mit einer Befestigungsvorrichtung für einen Bremssattel, wobei am Radträger eine abragende Rippe zur Befestigung des Bremssattels vorgesehen ist, **dadurch gekennzeichnet, daß** die Rippe (5; 5a) eine Herstellungsdicke (H_{D}) aufweist, die zur wahlweisen Befestigung eines Fest- oder Schwimmsattels (4; 4a) an jeder Seite um einen Dickenbetrag (D₁ bzw. D₂) derart verminderbar ist, daß eine Grunddicke (G₁ und G₂) der Rippe (5; 5a) bestehen bleibt und daß der Festsattel (4) an einer Außenseite und der Schwimmsattel (4a) an einer Innenseite der Rippe (5; 5a) mit einem definierten Abstand zur Bremsscheibe (2) über Schraubmittel (10) befestigbar ist.

2. Radträger mit einer Befestigungsvorrichtung nach Anspruch 1, **dadurch gekennzeichnet, daß** die Rippe (5; 5a) im Grundzustand mit der Herstellungsdicke (H_{D}) zu einer Rippenmittenebene (M) mit gleich dick ausgebildeten Rippenhälften ausgeführt ist und die Rippe (5; 5a) im Befestigungszustand mit einem Bremssattel (4 oder 4a) zur Mittenebene (M) unsymmetrisch ausgebildet ist.

3. Radträger mit einer Befestigungsvorrichtung nach den Ansprüchen 1 oder 2, **dadurch gekennzeichnet, daß** in der Rippe (5a) eine Durchgangsbohrung (12) für eine Schraube (10) vorgesehen ist, die zur Befestigung des Schwimmsattels (4a) an der Rippe (5a) dient und in eine Gewindebohrung (11) des Schwimmsattels (4a) eingreift.

4. Radträger mit einer Befestigungsvorrichtung nach den Ansprüchen 1 oder 2, **dadurch gekennzeichnet, daß** die Rippe (5) zur Befestigung des Festsattels (4) mittels einer Schraube (10), die in einer Durchgangsbohrung (14) des Festsattels (4) gehalten wird, eine Gewindebohrung (13) aufweist.

5. Radträger mit einer Befestigungsvorrichtung für einen Bremssattel, wobei der Bremssattel an einer abragenden Rippe befestigbar ist, **dadurch gekennzeichnet, daß** die Rippe (5; 5a) eine Herstellungsdicke (H_{D}) aufweist, die zur wahlweisen Befestigung eines Fest- oder Schwimmsattels (4; 4a) ausgebildet ist und die Herstellungsdicke (H_{D}) gleich einer Grunddicke für den Schwimmsattel (G2) bzw. für den Festsattel (G1) ist, wobei die Rippe etwa symmetrisch zu einer Mittenebene (M) angeordnet ist und an der Innenseite dieser Rippe ein Schwimmsattel (4a) bzw. an der Außenseite dieser Rippe ein Festsattel (4) über Schrauben (10) befestigbar ist.

## Claims

1. A wheel carrier with a mounting device for a brake calliper, wherein a projecting rib for mounting the brake calliper is provided on the wheel carrier, **characterised in that** the rib (5; 5a) has a manufactured thickness (H_{D}) which, in order to mount either a fixed or a floating calliper (4; 4a), is reducible on each side by an amount (D₁ or D₂) so that a basic thickness (G₁ and G₂) of the rib (5; 5a) remains, and **in that** the fixed calliper (4) is mountable on an outside and the floating calliper (4a) is mountable on an inside of the rib (5; 5a) by screw means (10) with defined spacing from the brake disc (2).

2. A wheel carrier with a mounting device according to claim 1, **characterised in that**, when the rib (5; 5a) is in the basic state with its manufactured thickness (H_{D}), it is formed with rib halves which are of uniform thickness in relation to a central plane (M) of the rib and, when the rib (5; 5a) is in the state in which a brake calliper (4 or 4a) is mounted on it, it is unsymmetrically formed in relation to the central plane (M).

3. A wheel carrier with a mounting device according to claim 1 or 2, **characterised in that** a through bore (12) is provided in the rib (5a) for a screw (10) which serves to mount the floating calliper (4a) on the rib (5a) and which engages in a threaded bore (11) in the floating calliper (4a).

4. A wheel carrier with a mounting device according to claim 1 or 2, **characterised in that** the rib (5) for mounting the fixed calliper (4) by means of a screw (10), which is held in a through bore (14) in the fixed calliper (4), has a threaded bore (13).

5. A wheel carrier with a mounting device for a brake calliper, wherein the brake calliper is fixable to a projecting rib, **characterised in that** the rib (5; 5a) has a manufactured thickness (H_{D}) formed for mounting either a fixed or a floating calliper (4; 4a), and the manufactured thickness (H_{D}) is equal to a basic thickness for the floating calliper (G₂) or for the fixed calliper (G₁), wherein the rib is arranged substantially symmetrically in relation to a central plane (M), and a floating calliper (4a) is mountable on the inside of this rib and a fixed calliper (4) is mountable on the outside of this rib by screws (10).

## Revendications

1. Support de roue comprenant un dispositif de fixation pour un étrier de frein, une nervure débordante étant prévue sur le support de roue pour la fixation de l'étrier de frein, **caractérisé en ce que** la nervure (5 ; 5a) présente une épaisseur de fabrication (H_{D}) qui peut être réduite d'une valeur d'épaisseur (D₁ ou D₂) pour la fixation éventuelle d'un étrier fixe ou d'un étrier flottant (4 ; 4a) sur chaque côté, de telle sorte qu'une épaisseur de base (G₁ et G₂) de la nervure (5 ; 5a) est conservée et que l'étrier fixe (4) peut être fixé sur un côté extérieur et l'étrier flottant (4a) sur un côté intérieur de la nervure (5 ; 5a) avec un espacement défini au disque de frein (2) par des moyens de vissage (10).

2. Support de roue comprenant un dispositif de fixation selon la revendication 1, **caractérisé en ce que** la nervure (5 ; 5a) est réalisée dans l'état de base avec l'épaisseur de fabrication (H_{D}) par rapport à un plan médian de nervure (M) avec des moitiés de nervure conçues avec une épaisseur identique et la nervure (5 ; 5a) est conçue de façon dissymétrique par rapport au plan médian (M) dans l'état de fixation avec un étrier de frein (4 ou 4a).

3. Support de roue comprenant un dispositif de fixation selon la revendication 1 ou 2, **caractérisé en ce que**, dans la nervure (5a), un alésage de passage (12) est prévu pour une vis (10) qui sert à la fixation de l'étrier flottant (4a) sur la nervure (5a) et s'engage dans un alésage fileté (11) de l'étrier flottant (4a).

4. Support de roue comprenant un dispositif de fixation selon la revendication 1 ou 2, **caractérisé en ce que** la nervure (5) pour la fixation de l'étrier fixe (4) au moyen d'une vis (10), qui est maintenue dans un alésage de passage (14) de l'étrier fixe (4), présente un alésage fileté (13).

5. Dispositif de fixation pour un étrier de frein, l'étrier de frein pouvant être fixé sur une nervure débordante, **caractérisé en ce que** la nervure (5 ; 5a) présente une épaisseur de fabrication (H_{D}) qui est conçue pour la fixation au choix d'un étrier fixe ou d'un étrier flottant (4 ; 4a) et l'épaisseur de fabrication (H_{D}) est identique à une épaisseur de base pour l'étrier flottant (G2) ou pour l'étrier fixe (G1), la nervure étant disposée de façon à peu près symétrique par rapport à un plan médian (M) et un étrier flottant (4a) peut être fixé au moyen de vis (10) sur le côté intérieur de cette nervure ou un étrier fixe (4) sur le côté extérieur de cette nervure.
